(19) Europäisches Patentamt / European Patent Office / Office européen des brevets

(11) **EP 2 038 214 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(21) Anmeldenummer: **06792618.8**

(22) Anmeldetag: **31.07.2006**

(51) Int Cl.:
*C01B 13/22* $^{(2006.01)}$   *C01B 13/24* $^{(2006.01)}$
*C01B 33/18* $^{(2006.01)}$   *C01B 33/12* $^{(2006.01)}$
*B01J 19/26* $^{(2006.01)}$

(86) Internationale Anmeldenummer:
**PCT/EP2006/064851**

(87) Internationale Veröffentlichungsnummer:
**WO 2008/000302 (03.01.2008 Gazette 2008/01)**

(54) **HERSTELLUNG PYROGENER METALLOXIDE IN TEMPERIERTEN REAKTIONSKAMMERN**

PRODUCTION OF PYROGENIC METAL OXIDES IN TEMPERATURE-CONTROLLED REACTION CHAMBERS

FABRICATION D'OXYDES MÉTALLIQUES PYROGÉNÉS DANS DES CHAMBRES DE RÉACTION TEMPÉRÉES

(84) Benannte Vertragsstaaten:
**BE DE FR GB**

(30) Priorität: **29.06.2006 DE 102006030002**

(43) Veröffentlichungstag der Anmeldung:
**25.03.2009 Patentblatt 2009/13**

(73) Patentinhaber: **Wacker Chemie AG**
**81737 München (DE)**

(72) Erfinder:
- **GOTTSCHALK-GAUDIG, Torsten**
  **84561 Mehring (DE)**
- **NIEMETZ, Markus**
  **5121 St. Radegund (AT)**

(74) Vertreter: **Fritz, Helmut et al**
**Wacker Chemie AG**
**Intellectual Property**
**Hanns-Seidel-Platz 4**
**81737 München (DE)**

(56) Entgegenhaltungen:
EP-A1- 0 634 360   DE-A1- 2 122 974
US-A- 4 108 964

- **H. SIEGER, M. WINTERER, U. KEIDERLING, H. HAHN: "Oxide Powders for Chemical Mechanical Polishing Produced by Chemical Vapor Synthesis" MATERIALS RESEARCH SOCIETY SYMPOSIUM PROCEEDINGS, Bd. 671, 2001, Seiten M2.5.1-M2.5.5, XP002421819 Materials Research Society,**

Bemerkungen:
Die Akte enthält technische Angaben, die nach dem Eingang der Anmeldung eingereicht wurden und die nicht in dieser Patentschrift enthalten sind.

EP 2 038 214 B1

**Beschreibung**

Die Erfindung betrifft pyrogene Metalloxide mit ausgezeichneter und konstanter Qualität, deren Herstellung und ihre Verwendung. Pyrogene Metalloxide, insbesondere pyrogene Kieselsäuren finden breite technische Verwendung als verstärkende Füllstoffe in Elastomeren, als rheologische Additive für Beschichtungs-, Kleb- und Dichtstoffe oder beim chemisch-mechanischen Polieren von Oberflächen z.B. im Halbleiterbereich. Pyrogene Metalloxide wie beispielsweise pyrogene Kieselsäure werden erhalten durch Hochtemperaturhydrolyse von Halogensiliziumverbindungen in einer Wasserstoff-Sauerstoff-Flamme, wie z.B. beschrieben in Ullmann's Encyclopedia of Industrial Chemistry (Wiley-VCH Verlag GmbH & Co. KGaA, 2002).

Für die oben genannten Anwendungsbereiche relevante Qualitätsmerkmale pyrogener Metalloxide sind deren spezifische Oberfläche, die Raumstruktur der Sinteraggregate, der mittlere hydrodynamische Äquivalenzdurchmesser der Sinteraggregate, der Anteil von Grobpartikeln und die Konzentration von metallischen und nicht-metallischen Verunreinigungen. Dabei werden die Qualitätsmerkmale ausschließlich oder zumindest zum größten Teil in der Reaktionszone des Prozesses, d.h. in der Flammzone beeinflußt.

Ferner ist das konstante Einhalten der oben genannten Qualitätsmerkmale ausschlaggebend für den Einsatz der Metalloxidpartikel in den genannten Anwendungsgebieten.

Eine inhärente Eigenschaft der Herstellung pyrogener partikulärer Feststoffe ist die Tatsache, daß eine postsynthetische Verbesserung der Qualität beispielsweise durch Reinigungsschritte wie Umfällen oder Rekristallisation nicht möglich ist.

Hohe Produktqualität bedeutet dabei, daß sich durch die verbesserten Produktionsbedingungen der Anteil von Grobpartikeln verringert, was sich in einer engeren Verteilung des hydrodynamischen Äquivalenzdurchmesser der Sinteraggregate zeigt, bezogen auf Produkte, die ohne Einsatz der erfindungsgemäß verbesserten Produktionsbedingungen erhalten wurden.

Konstante Produktqualität bedeutet, daß bei einer statistischen Auswertung der Qualitätsmerkmale die resultierende Normalverteilung der Meßwerte eine enge Standardabweichung aufweist.

Aufgabe der Erfindung ist es, den Stand der Technik zu verbessern, insbesondere pyrogene Metalloxidpartikel von gleich bleibend hoher Qualität bereitzustellen und Produktionsbedingungen zu finden, die im technischen Maßstab zu einer konstanten Produktqualität der pyrogenen Metalloxide führen.

Überraschenderweise und in keiner Weise durch den Fachmann vorauszusehen wurde nun gefunden, daß durch Steuerung der Flammen-Reaktorwandtemperatur die Qualität und Qualitätskonstanz der erhaltenen pyrogenen Metalloxide deutlich verbessert werden kann.

Gegenstand der Erfindung ist ein Verfahren zur Herstellung von pyrogenen Metalloxiden, dadurch gekennzeichnet, dass eine Hochtemperaturhydrolyse von verdampfbaren Halogenmetallverbindungen der allgemeinen Formel I

$$MH_aR_bX_c \qquad \text{(I)}$$

zu Metalloxiden der allgemeinen Formel II

$$M_dO_e \qquad \text{(II)}$$

abläuft mit,

M    Si, Al, Ti, Zr, Zn, Ce, Hf, Fe
R    ein M-C-gebundener $C_1$-$C_{15}$-Kohlenwasserstoff- bevorzugt ein $C_1$-$C_8$-Kohlenwasserstoff-Rest und besonders bevorzugt ein $C_1$-$C_3$-Kohlenwasserstoff-Rest, oder Arylrest, wobei R gleich oder verschieden sein kann,
X    Halogenatom, OR-Rest, wobei R die oben genannte Bedeutung hat,
a    0, 1, 2, 3,
b    0, 1, 2, 3,
c    1, 2, 3, 4,
d    1, 2,
e    1, 2, 3

sein kann, mit der Maßgabe, daß die Summe a + b + c für

| | |
|---|---|
| Si, Ti, Zn, Zr, Hf | 4, |
| Al, Fe | 3, |
| Zn | 2, |

ist, wobei das Verfahren bei einer Wandtemperatur von kleiner 250°C abläuft.

Die erfindungsgemäß zur Reaktion gebrachten Metallhalogenverbindungen der allgemeinen Formel I sind insbesondere dadurch charakterisiert, daß sie bei Temperaturen von kleiner 200 °C, bevorzugt kleiner 100 °C und besonders bevorzugt kleiner 80 °C unzersetzt verdampfbar.sind.

Bevorzugt eingesetzte Metallhalogenverbindungen der allgemeinen Formel I sind Tetrachlorsilan, Methyltrichlorsilan, Hydrogentrichlorsilan, Hydrogenmethyldichlorsilan, Tetramethoxysilan, Tetraethoxysilan, Hexamethyldisiloxan, oder deren Gemische. Tetrachlorsilan ist besonders bevorzugt.

Die Metallhalogenverbindungen der allgemeinen Formel I können als Reinstoff oder als Mischung verschiedener Verbindungen der allgemeinen Formel I zur Reaktion gebracht werden, wobei die Mischung vor der Eindosierung in die Verdampfereinheit hergestellt werden kann oder im Verdampfer durch parallele Eindosierung der verschiedenen Komponenten gebildet werden kann. Bevorzugt ist die Mischung vor dem Verdampfer.

Die Metallhalogenverbindungen können ferner vorzugsweise Nichtmetallverbindungen wie Kohlenwasserstoffe bis zu einem Massenanteil von 20% enthalten.

Als Brenngase zum Erzielen der benötigten Temperaturen und als Quelle für Wasser dienen Wasserstoff und Luft.

Vorzugsweise wird das zur Hydrolyse der Chlorsilane benötigte Wasser durch Reaktion der Brenngase erzeugt. D.h., daß bevorzugt kein Wasserdampf in den Flammen-Reaktor eingespeist wird.

Die Einspeisung der Brenngase und der verdampften Metallhalogenverbindungen der allgemeinen Formel I erfolgt mittels Düsen bekannter Bauart in den Flammen-Reaktorraum.

Die Reaktion zwischen den genannten Brenngasen ist stark exotherm mit $\Delta H^{293}$ = -12 kJ/mol. Die Abkühlung der Reaktionsgase erfolgt nach dem Reaktor über Wärmetauschersysteme gemäß Stand der Technik.

Der Flammen-Reaktor besteht aus Aluminium oder aus hitze- und korrosionsbeständigem Stahl, bevorzugt ist Spezialstahl mit überwiegendem Nickelanteil.

Bevorzugt handelt es sich um einen geschlossenen Flammen-Reaktor wie z.B. beschrieben in DE 1244125.

Die Flammen-Reaktorwandfläche ist kleiner als 200 m$^2$, bevorzugt kleiner 100 m$^2$. Die Flammen-Reaktorwand kann jede beliebige geschlossene geometrische Form besitzen, bevorzugt ist eine zylindrische Ausführung.

Vorzugsweise wird die Flammen-Reaktorwand gekühlt. Der Mantel des Flammen-Reaktors kann dabei einwandig oder doppelwandig ausgeführt sein, bevorzugt ist die doppelwandige Ausführung.

Durch den Bereich zwischen den beiden Wänden strömt das Kühlmedium, wobei der Abstand vorzugsweise so gewählt ist, daß abhängig vom eingesetzten Kühlmedium eine laminare oder turbulente Strömung resultiert. Bevorzugt ist turbulente Strömung.

Bevorzugt ist es auch möglich, den Mantel über eine Rohrschlange zu kühlen, die um die Flammen-Reaktorwand gewickelt ist, durch die das Kühlmedium fließt. Ebenso sind beliebige Kombinationen beider Varianten möglich. Die Ausführung der Kühlgeometrie erfolgt derart, daß die Strömung und der Wärmeübergangskoeffizient des Kühlmediums optimal ausgelegt ist, abhängig vom Kühlmedium.

Die Kühlung erfolgt derart, daß das Kühlmedium über die Flammen-Reaktoraußenfläche geführt wird. Dabei wird die Flammen-Reaktorinnenwand über die Wandfläche gekühlt und das Kühlmedium aufgewärmt.

Das Kühlmedium ist eine geeignete Substanz oder ein Substanzgemisch mit entsprechendem Wärmeübergangskoeffizienten, bevorzugt Wasser oder Kühlsole, oder eine gasförmige Substanz, bevorzugt Luft.

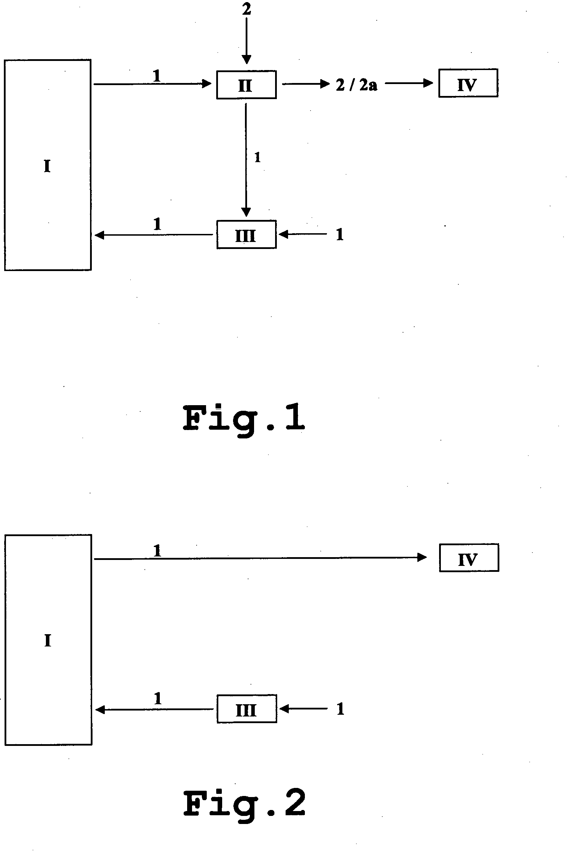

Das Kühlmedium kann bevorzugt im Kreis geführt werden (Fig. 1), aber auch direkt an Verbraucher abgegeben werden (Fig. 2). Dazu wird das Kühlmedium (1) aktiv mit Förderhilfsmitteln (III), bevorzugt einer oder mehrerer Pumpen geeigneter Bauart, im Kreislauf gehalten, oder durch Eigendruck oder Konvektion, insbesondere bei gasförmigen Medien, über die Außenfläche der Flammen-Reaktor (I) geführt. Bei der Kreislauf-Variante wird das erwärmte Kühlmedium einem Austausch-Element(II) zugeführt, wo ein Wärmeaustausch zu einem anderen Medium (z.B. Wasser, Luft) (2) erfolgen kann, um das Kühlmedium wieder abzukühlen. Bei Verwendung von Förderhilfsmitteln ist die Anordnungsreihenfolge von Austausch-Element (II) und Förderhilfsmittel (III) im Kreislauf frei und beliebig austauschbar.

Bei dem Einsatz von Wasser als Kühlmedium (1) wird bevorzugt die abgeführte Wärme in Form von Wasserdampf (2a) zurückgewonnen. Dazu wird das System unter Druck gehalten. Je höher der Druck des Systems, desto höher ist die Temperatur des abgegebenen Wasserdampfs. Der Innendruck des Systems ist größer als 1 bar, bevorzugt größer als 2 bar und besonders bevorzugt größer als 5 bar.

Der erfindungsgemäß erzeugte Wasserdampf kann mittels bekannter Verfahren zur Wärmeerzeugung oder zur Erzeugung von elektrischer Energie genützt werden (IV).

Zusätzlich zur Wandfläche selbst können nach dem gleichen Schema auch alle Einbauten gekühlt werden, wie z.B. Düsen, Sonden, oder Prozeßsteuerungseinrichtungen wie beispielsweise Temperaturmessgeräte oder Flammenwächter. Dadurch verbessert sich deren Standzeit deutlich, und die Verunreinigungen im Produkt durch Korrosion der Einbauten werden beseitigt.

Die Kühlung der Einbauten kann über den gleichen Kühlstrang erfolgen, es kann aber auch ein separater, zweiter Strang mit Kühlmedium betrieben werden, der entweder mit dem ersten zusammenhängt, oder aber völlig isoliert betrieben wird.

Eintrittstemperatur des Kühlmediums in den Kühlraum beträgt weniger als 500 °C, bevorzugt weniger als 250 °C und besonders bevorzugt weniger als 200 °C.

Austrittstemperatur des Kühlmediums aus dem Kühlraum beträgt weniger als 500 °C, bevorzugt weniger als 250 °C und besonders bevorzugt weniger als 200 °C.

Die Temperatur der Flammenreaktorinnenwand beträgt weniger als 250 °C und besonders bevorzugt weniger als 200 °C.

Nach der Umsetzung im Brennerraum wird das Reaktionsgemisch bestehend aus Partikeln und Prozeßgas abgekühlt und die Metalloxidpartikel vom Prozeßgas getrennt. Dies erfolgt bevorzugt über Filter.

Ein weiterer Vorteil gekühlter Flammen-Reaktoren ist, daß die Prozeßgase im gekühlten Reaktorraum vorgekühlt werden. Damit kann die der Flammen-Reaktor nachgeschalteten Prozeßgaskühlung effektiver Arbeiten und apparativ kleiner ausfallen.

Anschließend werden die Metalloxidpartikel vom adsorbierten Chlorwasserstoffgas gereinigt. Dies erfolgt vorzugsweise in einem heißen Gasstrom, als Gase sind bevorzugt Luft oder Stickstoff bei Temperaturen von 250 °C - 600 °C, bevorzugt 250 °C - 500°C und besonders bevorzugt 300 °C - 450 °C.

Ein weiterer Gegenstand der Erfindung sind pyrogene Metalloxide der allgemeinen Formel II, die gemäß des erfindungsgemäßen Prozesses erhalten wurden.

Bei den pyrogenen Metalloxiden kann es sich um Oxide der 2. oder 3. Hauptgruppe wie Aluminium, Silizium, Zinn oder um Übergangsmetalloxide wie Titanoxid, Zirkondioxid, Eisenoxide oder andere handeln.

Bevorzugt sind Siliziumdioxid, Aluminiumoxid, Titanoxid und Zirkonoxid, besonders bevorzugt ist Siliziumdioxid, ganz besonders bevorzugt ist pyrogenes Siliziumdioxid.

Die erfindungsgemäßen pyrogenen Metalloxide weisen eine spezifische Oberfläche vorzugsweise größer 10 $m^2/g$, bevorzugt zwischen 30 und 500 $m^2/g$ und besonders bevorzugt zwischen 50 und 450 $m^2/g$ auf, gemessen nach der BET-Methode gemäß DIN EN ISO 9277/DIN 66/22.

Die erfindungsgemäßen Metalloxide sind ferner dadurch gekennzeichnet, daß sie vorzugsweise einen kleinen Anteil an Grobpartikeln aufweisen.

Dies bedeutet, daß der Polydispersitätsindex (PDI) des mittleren intensitätsgewichteten Partikeldurchmessers z-Average der erfindungsgemäßen Metalloxide, erhalten mittels Photonenkorrelationsspektroskopie, kleiner 0,3, bevorzugt kleiner 0,25 und besonders bevorzugt kleiner 0,2 ist.

Dies bedeutet ferner, daß die erfindungsgemäßen Metalloxide einen Siebrückstand nach Mocker, gemessen gemäß DIN EN ISO 787-18, von kleiner 0,04 %, bevorzugt kleiner 0,01 % und besonders bevorzugt kleiner 0,007 % aufweisen.

Die erfindungsgemäßen Metalloxide sind insbesondere dadurch gekennzeichnet, daß sie einen geringen Anteil an schwer dispergierbaren Partikeln aufweisen.

Dies bedeutet, daß der Grindometerwert der erfindungsgemäßen Metalloxide in einem Polydimethylsiloxan mit einer spezifischen Viskosität von 1000 cS kleiner als 150 $\mu$m, bevorzugt kleiner als 120 $\mu$m und besonders bevorzugt kleiner als 100 $\mu$m ist.

Dies bedeutet ferner, daß feuchtigkeitvernetzende Silikondichtmassen (RTV-I-Massen), die die erfindungsgemäßen Metalloxide enthalten, nur wenige, bevorzugt keine Oberflächenstörungen durch Grobpartikel oder unzureichend dispergierte Partikel aufweisen.

Die erfindungsgemäß hergestellten Metalloxidpartikel sind vorzugsweise insbesondere dadurch charakterisiert, daß sie sich durch eine exzellente Produktionskonstanz mit einer geringen Schwankungsbreite (Standardabweichung nach Normalverteilung) qualitätsrelevanter Parameter auszeichnen. Die Standardabweichung $\sigma$ ist dabei die Quadrat-wurzel aus der Varianz, berechnet gemäß Formel (III).

$$\sigma = \sqrt{\frac{1}{N-1} \cdot \sum_{i=1}^{N} \left(x_i - \bar{x}\right)^2} \qquad\qquad \text{(III)}$$

Wobei N die Anzahl der Einzelwerte, $x_i$ ein Einzelwert und x der Mittelwert aller $x_i$ darstellen, mit i im Bereich von 1 bis N. auszeichnen.

Die erfindungsgemäßen Metalloxide sind vorzugsweise insbesondere dadurch gekennzeichnet, daß sie eine hohe Produktionskonstanz mit einer geringen Schwankungsbreite an fremdmetallischen Verunreinigungen aufweisen.

Dies bedeutet hier im Einzelnen für den Gehalt an Eisen eine Standardabweichung von vorzugsweise kleiner 0,5 ppm , bevorzugt kleiner als 0,3 ppm und besonders bevorzugt kleiner als 0,2 ppm um den Mittelwert über einen Produktionszeitraum von 30 Chargen mit einer Chargengröße von mindestens 1 to.

Dies bedeutet ferner für den Gehalt an Nickel eine Standardabweichung von vorzugsweise kleiner 0,5 ppm , bevorzugt kleiner als 0,3 ppm und besonders bevorzugt kleiner als 0,2 ppm um den Mittelwert über einen Produktionszeitraum von 30 Chargen mit einer Chargengröße von mindestens 1 to.

Dies bedeutet ferner für den Gehalt an Molybdän eine Standardabweichung von vorzugsweise kleiner 0,2 ppm, bevorzugt kleiner als 0,1 ppm und besonders bevorzugt kleiner als 0,05 ppm um den Mittelwert über einen Produktionszeitraum von 30 Chargen mit einer Chargengröße von mindestens 1 to.

Dies bedeutet ferner für den Gehalt an Chrom eine Standardabweichung von vorzugsweise kleiner 0,25 ppm, bevorzugt kleiner als 0,1 ppm und besonders bevorzugt kleiner als 0,05 ppm um den Mittelwert über einen Produktionszeitraum von 30 Chargen mit einer Chargengröße von mindestens 1 to.

Dies bedeutet ferner für den Gehalt an Aluminium eine Standardabweichung von vorzugsweise kleiner 3,0 ppm, bevorzugt kleiner als 2,0 ppm und besonders bevorzugt kleiner als 1,5 ppm um den Mittelwert über einen Produktionszeitraum von 30 Chargen mit einer Chargengröße von mindestens 1 to.

Die erfindungsgemäßen Metalloxide sind des weiteren dadurch gekennzeichnet, daß die mittlere Partikelgröße gemessen als mittlerer intensitätsgewichteter Partikeläquivalentdurchmesser z-Average durch Photonenkorrelationsspektroskopie mit einem Nanosizer ZS der Fa. Malvern in 173°-Rückstreuung über einen Produktionszeitraum von 30 Chargen mit einer Chargengröße von mindestens 1 to eine Normalverteilung mit einer Standardabweichung von vorzugsweise maximal 10% der mittleren Partikelgröße, bevorzugt von maximal 7,5% der mittleren Partikelgröße und besonders bevorzugt von maximal 5% der mittleren Partikelgröße und in einer speziellen Ausführung von maximal 1% der mittleren Partikelgröße aufweist.

Die erfindungsgemäßen Metalloxide sind des weiteren dadurch gekennzeichnet, daß die spezifische Oberfläche der Metalloxidpartikel gemessen als BET-Oberfläche gemäß DIN EN ISO 9277 / DIN 66/32 über einen Produktionszeitraum von 30 Chargen mit einer Chargengröße von mindestens 1 to eine Normalverteilung mit einer Standardabweichung von vorzugsweise maximal 10% der spezifischen BET-Oberfläche, bevorzugt von maximal 7,5% der spezifischen BET-Oberfläche und besonders bevorzugt von maximal 5% der spezifischen BET-Oberfläche aufweist.

Der Grobgutanteil bzw. Anteil schwer dispergierbarer Partikel in Metalloxiden ist eine wesentliche qualitätsbestimmende Größe insbesondere beim Einsatz als verstärkender Füllstoff in Elastomeren, bei der Rheologiekontrolle von Farben, Lacken, Kleb- und Dichtstoffen und im Bereich des Chemisch-Mechanischen-Planarisierens von Oberflächen im Halbleiterbereich.

Die Produktionskonstanz, d.h. eine gleichbleibende Qualität der Metalloxidpartikel, ist ausschlaggebend für den erfolgreichen Einsatz der Partikel als verstärkender Füllstoff in Elastomeren, bei der Rheologiekontrolle von Farben, Lacken, Kleb- und Dichtstoffen und im Bereich des Chemisch-Mechanischen-Planarisierens von Oberflächen im Halbleiterbereich.

**Beispiele**

**Beispiel 1:**

10,8 kg/h Siliciumtetrachlorid werden mit 76,3 Nm$^3$/h Luft und 20,7 Nm$^3$/h Wasserstoffgas vermischt und in einer Brennerdüse bekannter Bauart in eine Flamme in einem Flammen-Reaktor geleitet. In den Flammen-Reaktor werden zusätzlich 12,0 Nm$^3$/h Luft eingeblasen. Die Reaktorkammerwand wurde mit Wasser auf 170 °C temperiert. Die Kühlwasseraustrittstemperatur betrug 180 °C. Nach Austritt aus dem Flammen-Reaktor wird das entstandene Kieselsäure-Gasgemisch auf 120-150 °C abgekühlt, und anschließend wird die Kieselsäure von der Chlorwasserstoff-haltigen Gasphase in einem Filtersystem getrennt. Bei erhöhter Temperatur werden anschließend durch Zugabe von über die Verbrennung von Erdgas erhitzter Luft Reste von Chlorwasserstoff entfernt. Es wird eine pyrogene Kieselsäure erhalten, deren analytische Daten in Tabelle 1 zusammengefaßt sind.

**Beispiel 2:**

10,8 kg/h Siliciumtetrachlorid werden mit 63,8 Nm$^3$/h Luft und 16,9 Nm$^3$/h Wasserstoffgas vermischt und in einer Brennerdüse bekannter Bauart in einer Flamme in einem Flammen-Reaktor geleitet. In den Flammen-Reaktor werden zusätzlich 20,0 Nm$^3$/h Luft eingeblasen. Die Reaktorkammerwand wurde mit Wasser auf 170 °C temperiert. Die Kühlwasseraustrittstemperatur betrug 180 °C. Nach Austritt aus dem Flammen-Reaktor wird das entstandene Kieselsäure-Gasgemisch auf 120-150°C abgekühlt, und anschließend wird der Feststoff Kieselsäure von der Chlorwasserstoff-haltigen Gasphase in einem Filtersystem getrennt. Bei erhöhter Temperatur werden anschließend durch Zugabe von über die Verbrennung von Erdgas erhitzter Luft Reste von Chlorwasserstoff entfernt. Es wird eine pyrogene Kieselsäure erhalten, deren analytische Daten in Tabelle 1 zusammengefaßt sind.

**Beispiel 3 (Vergleichsbeispiel, nicht erfindungsgemäß):**

10,8 kg/h Siliciumtetrachlorid werden in einer Mischkammer homogen mit 76,3 Nm$^3$/h Luft und 20,7 Nm$^3$/h Wasserstoffgas vermischt und in einer Brennerdüse bekannter Bauart in einer Flamme in einen Flammen-Reaktor geleitet. In den Flammen-Reaktor werden zusätzlich 12,0 Nm$^3$/h Luft eingeblasen. Die Reaktorkammerwand wurde nicht aktiv gekühlt. Durch Temperaturabstrahlung der nicht isolierten Reaktorkammerwand in die Umgebung stellte sich eine Reaktorkammerwandtemperatur von 630 °C ein. Nach Austritt aus dem Flammen-Reaktor wird das entstandene Kieselsäure-Gasgemisch auf 120-150°C abgekühlt, und anschließend wird der Feststoff Kieselsäure von der Chlorwasserstoff-haltigen Gasphase in einem Filtersystem getrennt. Bei erhöhter Temperatur werden anschließend durch Zugabe von über die Verbrennung von Erdgas erhitzter Luft Reste von Chlorwasserstoff entfernt. Es wird eine pyrogene Kieselsäure erhalten, deren analytische Daten in Tabelle 1 zusammengefaßt sind.

**Beispiel 4:**

Gemäß Beispiel 1 werden 30 unabhängige Chargen mit einer Mindestchargengröße von 1 to hergestellt. Die Produktionskonstanz der analytischen Daten ist in Tabelle 2 zusammengefaßt.

**Beispiel 5:**

Gemäß Beispiel 2 werden 30 unabhängige Chargen mit einer Mindestchargengröße von 1 to hergestellt. Die Produktionskonstanz der analytischen Daten ist in Tabelle 2 zusammengefaßt.

**Beispiel 6 (Vergleichsbeispiel, nicht erfindungsgemäß):**

Gemäß Beispiel 3 werden 30 unabhängige Chargen mit einer Mindestchargengröße von 1 to hergestellt. Die Produktionskonstanz der analytischen Daten ist in Tabelle 2 zusammengefaßt.

**Analytische Methoden:**

- Gehalt an Fe, Cr, Ni, Mo bzw. deren Standardabweichung $\sigma$ / nm: Messung mittels ICP-MS aus dem wäßrigen Auszug des Aufschlusses der Kieselsäure mit wäßriger HF.
- Gehalt an Al bzw. der Standardabweichung $\sigma$ / nm: Messung mittels ICP-AES aus dem wäßrigen Auszug des Aufschlusses der Kieselsäure mit wäßriger HF.
- spezifische BET-Oberfläche bzw. deren Standardabweichung $\sigma$ / %: Messung gemäß DIN EN ISO 9277/DIN66/32; $\sigma$ / % = $\sigma$ / Mittelwert BET aus 30 Chargen * 100%.
- intensitätsgewichteter hydrodynamischer Äquivalentdurchmesser z-Average bzw. dessen Standardabweichung $\sigma$ / % und Polydispersitätsindex PDI: Messung mittels PCS in 173 °- Rückstreuung; Meßdauer: 15 Meßruns mit 40 s pro Run bei 25 °C; Probe: 0,3 wt% in einer ammonikalischen Lösung von pH 10; Dispergierung für 2,5 min mittels Ultraschallstab; $\sigma$ / = $\sigma$ / Mittelwert z-Average aus 30 Chargen * 100%.
- Siebrückstand: Messung nach Mocker (> 40 $\mu$m) gemäß DIN EN ISO 787-18.
- Grindometerwert: 2 g Kieselsäure werden mit einem Spatel in 98 g eines Polydimethylsiloxans mit einer Viskosität von 1000 cS eingerührt und anschließend an einem Dissolver mit 40 mm Zahnscheibe bei einer Umlaufgeschwindigkeit von 5600 upm für 5 min dispergiert. Messung auf einem Grindometer mit Meßbereich 0 - 250 $\mu$m.

**Tabelle 1**

| Beispiel | BET / m2/g | Siebrückstand / % | z-Average / nm | PDI | Grindometerwert / $\mu$m |
|---|---|---|---|---|---|
| 1 | 201 | 0,002 | 203 | 0,163 | < 75 |
| 2 | 156 | 0,003 | 214 | 0,132 | < 75 |
| 3 | 204 | 0,067 | 211 | 0,319 | > 150 |

**Tabelle 2**

| Beispiel | $\sigma(Fe)/nm$ | $\sigma(Cr)/nm$ | $\sigma(Ni)/nm$ | $\sigma(Mo)/nm$ | $\sigma(Al)/nm$ | $\sigma(BET)/\%$ | $\sigma(z\text{-Average})/\%$ |
|---|---|---|---|---|---|---|---|
| 4 | 0,17 | 0,05 | 0,11 | 0,04 | 1,3 | 2,2 | 0,65 |
| 5 | 0,12 | -0,03 | 0,19 | 0,02 | 0,9 | 2,4 | 0,61 |
| 6 | 0,93 | 0,37 | 1,31 | 0,229 | 4,49 | 11,5 | 12,4 |

**Patentansprüche**

1.  Verfahren zur Herstellung von pyrogenen Metalloxiden, **dadurch gekennzeichnet, dass** eine Hochtemperaturhydrolyse von verdampfbaren
    Halogenmetallverbindungen der allgemeinen Formel I

    $$MH_aR_bX_c \qquad (I)$$

    zu Metalloxiden der allgemeinen Formel II

    $$M_dO_e \qquad (II)$$

    abläuft mit,

    M Si, Al, Ti, Zr, Zn, Ce, Hf, Fe
    R ein M-C-gebundener $C_1$-$C_{15}$-Kohlenwasserstoff- bevorzugt ein $C_1$-$C_8$-Kohlenwasserstoff-Rest und besonders bevorzugt ein $C_1$-$C_3$-Kohlenwasserstoff-Rest, oder Arylrest, wobei R gleich oder verschieden sein kann,
    X Halogenatom, OR-Rest, wobei R die oben genannte Bedeutung hat,
    a 0, 1, 2, 3,
    b 0, 1, 2, 3,
    c 1, 2, 3, 4,
    d 1, 2,
    e 1, 2, 3

    sein kann, mit der Maßgabe, dass die Summe a + b + c für

    Si, Ti, Zn, Zr, Hf    4,
    Al, Fe                3,
    Zn                    2,

    ist, wobei das Verfahren bei einer Wandtemperatur von kleiner 250 °C abläuft und Wasserstoff und Luft als Brenngase zum Erzielen der benötigten Temperaturen dienen.

2.  Verfahren zur Herstellung von pyrogenen Metalloxiden nach Anspruch 1, **dadurch gekennzeichnet, dass** das Verfahren bei einer Wandtemperatur von kleiner 200 °C abläuft.

3.  Verfahren zur Herstellung von pyrogenen Metalloxiden nach Anspruch 1 oder 2, **dadurch gekennzeichnet, dass** das pyrogene Metalloxid pyrogenes Siliciumdioxid ist.

4.  Pyrogenes Metalloxid, **dadurch gekennzeichnet, dass** der Polydispersitätsindex (PDI) des mittleren intensitätsgewichteten Partikeldurchmessers z-Average der Metalloxide, erhalten mittels Photonenkorrelationsspektroskopie, kleiner 0,3 ist.

5.  Pyrogenes Metalloxid nach Anspruch 4, **dadurch gekennzeichnet, dass** das Metalloxid pyrogenes Siliciumdioxid ist.

**Claims**

1.  Process for producing pyrogenic metal oxides, **characterized in that** a high-temperature hydrolysis of vaporizable halogen metal compounds of the general formula I

$$MH_aR_bX_c \qquad (I)$$

to metal oxides of the general formula II

$$M_dO_e \qquad (II)$$

takes place, with the following possible definitions:

M: Si, Al, Ti, Zr, Zn, Ce, Hf, Fe
R: an M-C-bonded, $C_1$-$C_{15}$ hydrocarbon radical, preferably a $C_1$-$C_8$ hydrocarbon radical and more preferably a $C_1$-$C_3$ hydrocarbon radical, or aryl radical, it being possible for each R to be alike or different,
X: halogen atom, OR radical, R being as defined above,
a: 0, 1, 2, 3,
b: 0, 1, 2, 3,
c: 1, 2, 3, 4,
d: 1, 2,
e: 1, 2, 3

with the proviso that the sum a + b + c is

4 for Si, Ti, Zn, Zr, Hf,
3 for Al, Fe,
2 for Zn,

the process taking place at a wall temperature of less than 250°C and hydrogen and air serving as combustion gases for obtaining the requisite temperatures.

2.  Process for producing pyrogenic metal oxides according to Claim 1, **characterized in that** the process takes place at a wall temperature of less than 200°C.

3.  Process for producing pyrogenic metal oxides according to Claim 1 or 2, **characterized in that** the pyrogenic metal oxide is pyrogenic silicon dioxide.

4.  Pyrogenic metal oxide **characterized in that** the polydispersity index (PDI) of the average intensity-weighted particle diameter z-average of the metal oxides, obtained by means of photon correlation spectroscopy, is less than 0.3.

5.  Pyrogenic metal oxide according to Claim 4, **characterized in that** the metal oxide is pyrogenic silicon dioxide.

**Revendications**

1.  Procédé de fabrication d'oxydes métalliques pyrogénés, **caractérisé en ce qu'**une hydrolyse à haute température de composés métalliques halogénés vaporisables de formule générale I

$$MH_aR_bX_c \qquad (I)$$

en oxydes métalliques de formule générale II

$$M_dO_e \qquad (II)$$

se déroule,

M pouvant représenter Si, Al, Ti, Zr, Zn, Ce, Hf, Fe,

R pouvant représenter un radical hydrocarboné en $C_1$-$C_{15}$ relié à M-C, de préférence un radical hydrocarboné en $C_1$-$C_8$ et de manière particulièrement préférée un radical hydrocarboné en $C_1$-$C_3$, ou un radical aryle, les R pouvant être identiques ou différents,

X pouvant représenter un atome d'halogène, un radical OR, R ayant la signification indiquée précédemment,

a pouvant représenter 0, 1, 2, 3,

b pouvant représenter 0, 1, 2, 3,

c pouvant représenter 1, 2, 3, 4,

d pouvant représenter 1, 2,

e pouvant représenter 1, 2, 3,

à condition que la somme a + b + c soit pour

Si, Ti, Zn, Zr, Hf de 4,

Al, Fe de 3,

Zn de 2,

le procédé se déroulant à une température de paroi inférieure à 250 °C, et de l'hydrogène et de l'air servant de gaz de combustion pour obtenir les températures nécessaires.

**2.** Procédé de fabrication d'oxydes métalliques pyrogénés selon la revendication 1, **caractérisé en ce que** le procédé se déroule à une température de paroi inférieure à 200 °C.

**3.** Procédé de fabrication d'oxydes métalliques pyrogénés selon la revendication 1 ou 2, **caractérisé en ce que** l'oxyde métallique pyrogéné est le dioxyde de silicium pyrogéné.

**4.** Oxyde métallique pyrogéné, **caractérisé en ce que** l'indice de polydispersité (PDI) de la moyenne z du diamètre de particule moyen pondéré par l'intensité des oxydes métalliques, obtenu par spectroscopie à corrélation de photons, est inférieur à 0,3.

**5.** Oxyde métallique pyrogéné selon la revendication 4, **caractérisé en ce que** l'oxyde métallique est le dioxyde de silicium pyrogéné.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1244125

**In der Beschreibung aufgeführte Nicht-Patentliteratur**

- Ullmann's Encyclopedia of Industrial Chemistry. Wiley-VCH Verlag GmbH & Co. KGaA, 2002